# EUROPEAN PATENT SPECIFICATION

(11) **EP 3 432 484 B1**
(45) Date of publication and mention of the grant of the patent: **02.06.2021**
(21) Application number: 17181663.0
(22) Date of filing: 17.07.2017
(51) Int. Cl.: H04B 7/06

(54) **BEAM SWITCHING METHOD, NODE AS WELL AS MULTI BEAM NETWORK**
STRAHLUMSCHALTUNGSVERFAHREN, KNOTEN SOWIE MEHRFACHSTRAHL MIT NETZWERK
PROCÉDÉ DE COMMUTATION DE FAISCEAU, AINSI QUE DE NOEUD RÉSEAU À FAISCEAUX MULTIPLES

(43) Date of publication of application: 23.01.2019
(73) Proprietor: Rohde & Schwarz GmbH & Co. KG, 81671 München (DE)
(72) Inventor: Raddino, Daniela, 80469 München (DE)
(74) Representative: Prinz & Partner mbB

(56) References cited:
- EP-A1- 3 029 901
- EP-A1- 3 579 442
- WO-A1-2010/033989
- WO-A1-2013/154334
- WO-A1-2017/083514

## Description

The invention relates to a beam switching method in a multi beam network, a node for a multi beam network, as well as a multi beam network for providing mobile telecommunication services.

The next generation of telecommunication networks (5G) will comprise multi beam networks. Each node, called gNB in the 5G specification, provides multiple beams to cover its cell area.

For efficient communication between the nodes and user equipments (UE), frequency-division multiplexing, especially orthogonal frequency-division multiplexing (OFDM) is used. In OFDM, the band or channel available for communication is divided into several orthogonal sub-bands called subcarriers. The frequency spacing between these subcarriers, i.e. subcarrier spacing, is one of several waveform parameters.

Another waveform parameter is the cyclic prefix, i.e. length of an interval at the beginning of each OFDM symbol that contains a repetition of the end of the respective OFDM symbol.

These and other waveform parameters define certain characteristics of the waveform and the achievable data transmission. The term numerology is used to describe one or more of these waveform parameters.

The signal transmission between the user equipments and the node is done using one of the multiple beams at a time. The choice of the beam depends on the current situation, e.g. idle or data transfer, and the channel condition. For very mobile user equipments the channel conditions and the situation may vary quickly, sometimes while rotating the user equipment. To ensure a highly reliable and high quality (data) connection, very frequent beam switches are necessary.

WO 2013 / 154 334 A1 discloses a multiple-input and multiple-output wireless communications system with a transmitter configured to transmit an OFDM signal from a base station to a mobile station. The transmitter is configured to insert a beam switching reference signal in the OFDM signal, wherein the beam switching reference signal is structured to estimate delay spread exceeding a cyclic prefix of the OFDM signal.

WO 2017 / 083 514 A1 describes a wireless transmit/receive unit (WTRU) for wireless communication, which in particular is capable of operating in the mm-wave frequency band. If several receive beams provided by a network node are present, the WTRU may switch the receive beam used for downlink data based on one or more parameters. However, frequent beam switching increases the risk of data loss during the switching process.

EP 3 029 901 A1 discloses a method of using different waveform numerologies for control channels compared to data channels to increase the robustness of the control channel.

The post-published EP 3 579 442 A1 which is prior art under Art. 54(3) EPC, discloses a beam sweeping method for a communication network having at least one network device and several terminal devices. The communication network may use a larger subcarrier spacing for a beam sweeping process on the network device side, while a reduced subcarrier spacing may be used for a beam sweeping process on the terminal device side.

Thus, it is the object if the invention to provide a beam switching method in a multi beam network, a node for a multi beam network, as well as a multi beam network for providing mobile telecommunication services that allow beam switching with reduced data loss.

For this purpose, a beam switching method in a multi beam network according to claim 1 is provided. In the context of the invention, to reduce or to increase numerology means to change the waveform parameters to increase or reduce the robustness of the transmission, respectively.

The waveform parameters are the subcarrier spacing and/or the length of the cyclic prefix. In this case, for decreasing numerology (and increasing robustness) the subcarrier spacing and/or the cyclic prefix are enlarged, whereas for increasing numerology the subcarrier spacing and/or the cyclic prefix are reduced.

The invention is based on the finding that different numerologies have different characteristics in terms of error-rate and robustness of the transmission. Thus, each numerology provides specific advantages in distinct scenarios even for the same user equipment.

By changing the numerology for the beam switching process it is possible to use a more robust and reliable numerology than during normal communication. Thus, the chance of data loss during the critical phase of beam switching is reduced so that the reliability of the transmission between the nodes and the user equipment is assured even in situations with frequent beam switches.

For example, the first beam is provided by a different node or the same node than the second beam. Therefore, beam switches of beams provided by the same node or beam switches between two nodes can be achieved with high reliability.

In another aspect of the invention, the method further comprises the step of sending a second numerology control message from the at least one node to the user equipment after the beam switching process. This way, the advantages of another numerology, e.g., high transmission rate and/or low latency may be used between two beam switching processes.

For this purpose, the second numerology control message may comprise a second numerology and/or an instruction for the user equipment to increase numerology to achieve a second numerology. This way, the transmission rate can be increased, wherein the second numerology defines waveform parameters.

To increase reliability during beam switching processes and high transmission rates between two beam switching processes, the second numerology is larger than first numerology. The second numerology is used for further communication between the nodes and the user equipment.

In another embodiment of the invention, the beam switching process comprises the following steps:
a) sending a beam switch configuration control message from the at least one node to the user equipment,
b) receiving a measurement report from the user equipment at the at least one node, and
c) sending a beam switch command from the at least one node to the user equipment.

The user equipment performs the beam switch upon reception of the beam switch command. The beam switch command may include information about the beam to be switched to. This way, the beam switch can be performed in a controlled manner.

In order to determine the beam to be used by the user equipment, the user equipment measures the beam quality of the beams identified in the beam switch configuration control message.

Preferably, prior to sending the beam switch command, the at least one node chooses the second beam from the multiple beams of the multi beam network based on at least the measurement report and/or beam load. This way, the most suitable beam for the user equipment can be chosen with high probability.

In a variation of the invention, the user equipment and the at least one node use a default numerology prior to sending the first numerology control message by the at least one node, and the user equipment and the at least one node use the default numerology again after a predefined period of time after sending the first numerology control message by the node, after a predefined period of time after sending the beam switch command, and/or after a predefined period of time after the beam switching process has been completed, wherein the default numerology defines waveform parameters. The default numerology may be the second numerology. This way, overhead can be reduced by eliminating the need for the second numerology control message. It is also possible that the user equipment and the at least one node use the default numerology again right away after the beam switching process has been completed.

For example, the symbol duration, in particular the orthogonal frequency-division multiplexing (OFDM) symbol duration, is longer using the first numerology than the symbol duration, in particular the orthogonal frequency-division multiplexing (OFDM) symbol duration, using the second numerology and/or the default numerology. This way, a very robust transmission during the beam switching process can be assured.

Further, the invention provides a node for a multi beam network configured to provide several beams and the node is configured to perform a method according to the invention in conjunction with a user equipment. Of course, the user equipment must be suitable for the method, i.e. support changing numerologies.

The invention further provides a multi beam network for providing mobile telecommunication services, comprising at least one node according to the invention.

Additional features and advantages of the invention will be apparent from the following description of the embodiments and the attached drawings to which reference is made. In the drawings:
- Figure 1 shows schematically a multi beam network according to the invention with nodes according to the invention,
- Figure 2 shows a time diagram of the beam switching method according to a first embodiment of the invention,
- Figure 3 shows a time diagram of a second embodiment of the method according to the invention,
- Figure 4 shows the multi beam network of Figure 1 in a different scenario, and
- Figure 5 shows a time diagram of a third embodiment of the method according to the invention.

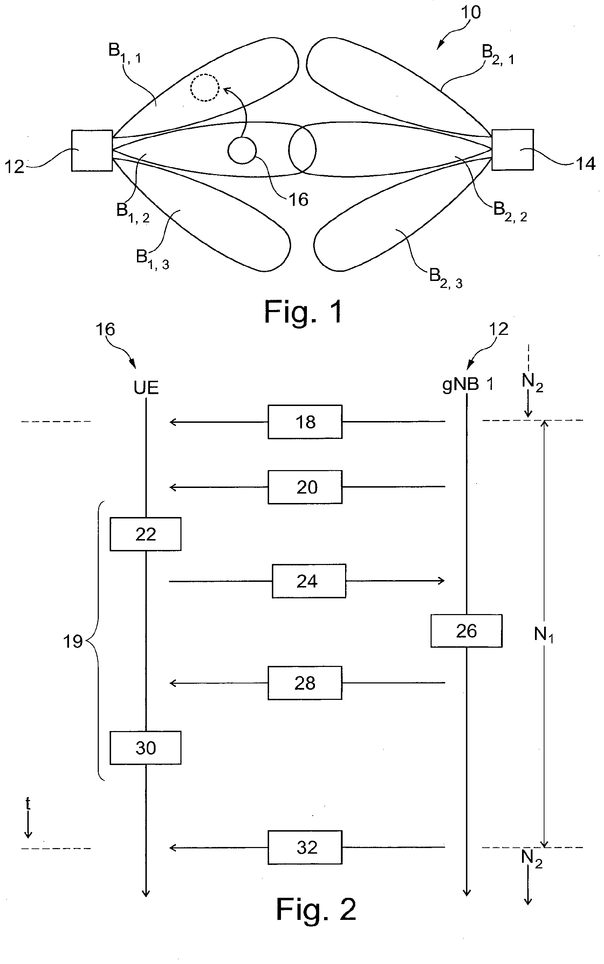

Figure 1 shows very schematically a multi beam network 10 for providing mobile telecommunication services, for example according to the 5G standard.

The multi beam network 10 comprises several nodes, of which a first node 12 and a second node 14 are shown.

The nodes 12, 14 are also abbreviated gNB and they are referred to as gNB1 and gNB2, respectively, in Figures 2, 3 and 5.

The first node 12 provides multiple beams for the multi beam network 10. For reasons of clarity, only three beams are shown, namely beam B_{1,1}, beam B_{1,2}, and beam B_{1,3}.

Likewise, the second node 14 provides several beams of which a beam B_{2,1}, beam B_{2,2}, and beam B_{2,3} are shown in Figure 1.

A user equipment 16, referred to as UE in Figures 2, 3 and 5, is present in the multi beam network 10.

Communication between the user equipment 16 and the nodes 12, 14 is done by a radio frequency using beam B_{1,2} of the first node 12. The modulation of the signals follows the 4G standard and it may follow also the 5G standard in the future, meaning that frequency-division multiplexing, more precisely orthogonal frequency-division multiplexing (OFDM) is used. Thus, the waveforms for the transmission can be parameterized using, for example, the subcarrier spacing and the length of the cyclic prefix as parameters. The values of these parameters are summarized as a numerology of the transmission.

The nodes 12, 14 and the user equipment 16 are configured and able to communicate with each other using different numerologies, namely a first numerology N₁ and a second numerology N₂, i.e. two sets of values for the subcarrier spacing and the length of the cyclic prefix.

The second numerology N₂ is larger than the first numerology N₁, meaning that the subcarrier spacing and the length of the cyclic prefix in the second numerology N₂ are smaller than the respective parameters in the first numerology N₁.

Because these parameters are smaller in the second numerology N₂, higher transmission rates are possible using the second numerology N₂. However, using the first numerology N₁ leads to a more robust transmission.

Further, because of the longer cyclic prefix, the OFDM symbol duration is longer using the first numerology N₁ than the OFDM symbol duration of the second numerology N₂ leading to a higher latency but more robust transmission.

In addition, the increased subcarriers spacing in the first numerology N₁ reduces inter-symbol interference (ISI) and therefore increases robustness further.

In the scenario shown in Figure 1, the user equipment 16 is located in the area covered by beam B_{1,2} of the first node 12. Beam B_{1,2} is the first beam in terms of the described method.

When the user equipment 16 moves from beam B_{1,2} to beam B_{1,1} of the first node 12, as indicated by the arrow in Figure 1, the user equipment 16 has to switch the beam used for communication with the first node 12 and thus the multi beam network 10. Beam B_{1,1 may} be called the second beam in the method of this invention.

Figure 2 shows a time diagram of the steps for a beam switching method.

In the beginning, the user equipment 16 and the first node 12 use the second numerology N₂. In Figures 2, 3 and 5 the numerology used at each point in time is shown on the right hand side.

To initiate the beam switch, the first node 12 sends a first numerology control message 18 to the user equipment 16.

The first numerology control message 18 includes the first numerology N₁, e.g. values for the waveform parameters like the subcarrier spacing and the length of the cyclic prefix or an indicator pointing towards the values of the first numerology N₁ stored in the user equipment 16.

It is also possible that the first numerology control message 18 comprises instructions for the user equipment 16 to reduce the numerology, i.e. instructions to increase the subcarrier spacing and the length of the cyclic prefix by certain amounts. This way, the first numerology N₁ is also reached.

The user equipment 16 and the first node 12 use this first, lower numerology N₁ henceforth so that the transmission becomes more robust at the price of lower transmission rates and a higher latency.

In the next step, a beam switching process 19 is started. The first node 12 sends a beam switch configuration control message 20 to the user equipment 16 in order to trigger a quality measurement 22 performed by the user equipment 16.

The beam switch configuration control message 20 includes information on which beams B_{1,1}, B_{1,2}, B_{1,3}, B_{2,1}, B_{2,2}, B_{2,3} to be measured. Further, the beam switch configuration control message 20 may contain information about the periodicity of the measurement.

The user equipment 16 performs the quality measurement 22 by measuring the transmission rate and quality of each of the beams B_{1,1}, B_{1,2}, B_{1,3}, B_{2,1}, B_{2,2}, B_{2,3} specified in the beam switch configuration control message 20.

After the measurement, the user equipment 16 sends a measurement report 24 to the first node 12 including the results of the quality measurement 22.

The first node 12 receives the measurement report 24 from the user equipment 16 and evaluates the measurement report 24.

Depending on the beam quality measured by the user equipment 16 and the load of each beam B_{1,1}, B_{1,2}, B_{1,3}, B_{2,1}, B_{2,2}, B_{2,3}, i.e. the data to be transferred via a specific beam, the first node 12 selects the second beam being the beam that is best suited for the new position of the user equipment 16 (selection step 26).

Then, the first node 12 sends a beam switch command 28 to the user equipment 16. The beam switch command specifies to the user equipment 16 the second beam to be used. In the case of Figure 1, this second beam is beam B_{1,1} of the first node 12.

The user equipment 16 then performs the beam switch 30 from the first beam being beam B_{1,2} of the first node 12 to the second beam being beam B_{1,1} of the first node 12.

The user equipment 16 and the first node 12 continue communicating, now via beam B_{1,1} of the first node 12. The beam switching process 19 is completed.

After the beam switch 30 has taken place, the first node 12 sends a second numerology control message 32 to the user equipment 16.

The second numerology control message 32 comprises the second numerology N₂, e.g. values for the waveform parameters like the subcarrier spacing and the length of the cyclic prefix or an indicator pointing towards the values of the second numerology N₂ stored in the user equipment 16.

Alternatively, the second numerology control message 32 may comprise instructions for the user equipment 16 to increase the numerology, i.e. to decrease the subcarrier spacing and the length of the cyclic prefix by certain amounts. This way, the second numerology N₂ can also be reached.

After reception of the second numerology control message 32, the user equipment 16 and the first node 12 use the second numerology N₂ for the following communication with each other.

This way, the latency of transmission is reduced and the transmission rate is increased. However, while using the second numerology N₂, the transmission is not as robust as during usage of the first numerology N₁.

Because the beam switch 30 has already taken place, the communication between the first node 12 and the user equipment 16 is now stable so that the robustness of the transmission may be decreased to achieve lower latency and higher data rates.

The numerology N₁ is used for the beam switching process 19 because the transmission quality, i.e. the signal strength and the like, will decrease during the beam switch 30 itself. Thus, a more robust transmission leads to smaller data loss.

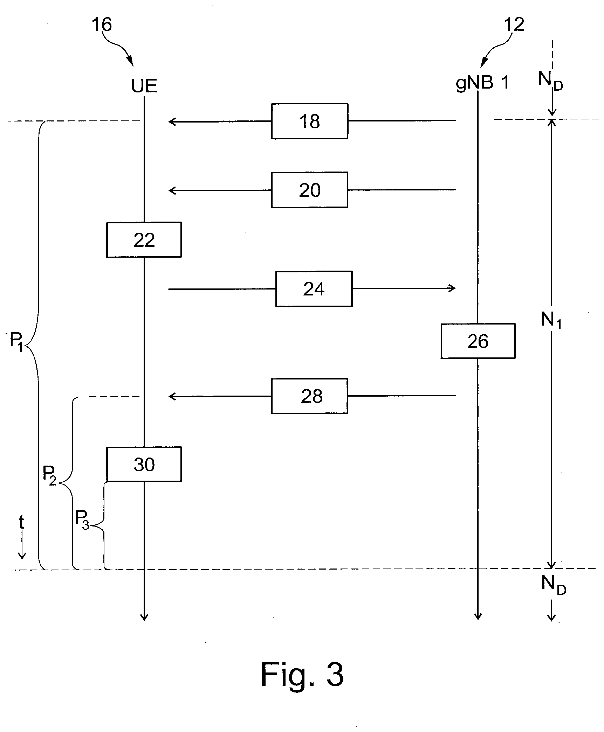

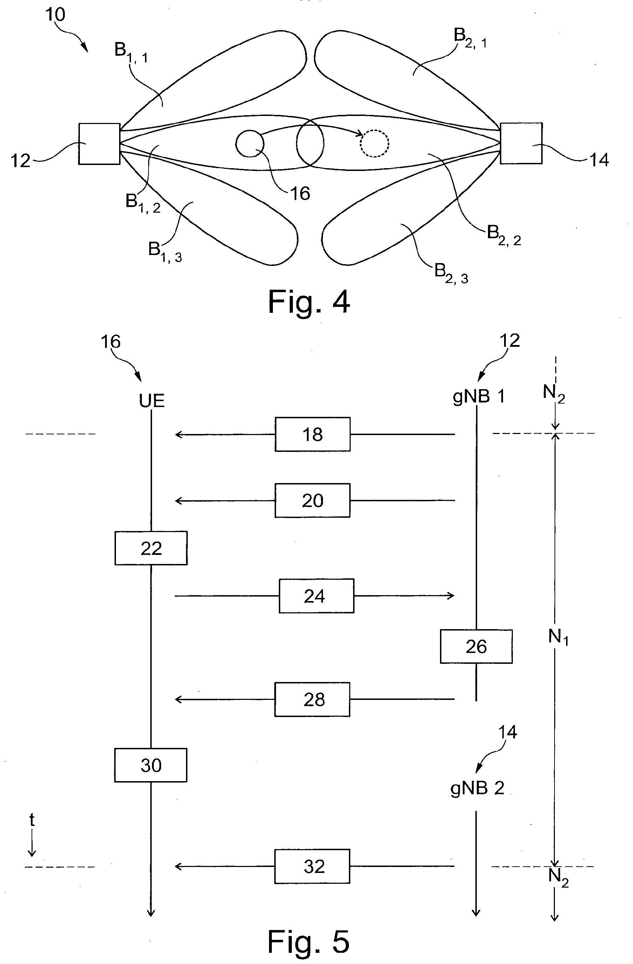

In Figures 3 and 5, further embodiments of the beam switching method are shown corresponding substantially to the method of the first embodiment. Thus, in the following only the differences are explained and same or functionally same parts are labeled with the same reference numbers.

Figure 3 shows a second embodiment of the beam switching method for the scenario shown in Figure 1. The difference between the first and the second embodiment of the beam switching method lies in the fact that no second numerology control message is sent to the user equipment 16.

At the beginning of the method, the user equipment 16 and the first node 12 use a default numerology N_{D} corresponding to the second numerology N₂ of the first embodiment.

The method is then performed as explained with respect to Figure 2 until the beam switch 30 has been performed.

Then, instead of changing the numerology of the transmission by sending a second numerology control message to the user equipment 16, the first node 12 and the user equipment 16 change automatically from using the first numerology N₁ to the default numerology N_{D} after a predefined period of time has lapsed.

The period of time may start either after sending the first numerology control message 18 (P₁), after sending the beam switch command 28 (P₂) or after the beam switching process 19 has been completed (P₃).

The three periods P₁, P₂, P₃ may have different predefined length.

It is also possible that all three periods of time P₁, P₂, P₃ are used simultaneously. In this case either the first or the last period that lapses triggers the change back to the default numerology N_{D}.

Figures 4 and 5 show a different scenario and a third embodiment of the beam switching method, respectively.

In the scenario shown in Figure 4, the user equipment 16 moves from beam B_{1,2} of the first node to beam B_{2,2} of the second node 14. Beam B_{2,2} is the second beam in this embodiment.

Thus, the beam switching method of the third embodiment shown in Figure 1 involves also the second node 14 as beam B_{1,2} and beam B_{2,2} are provided by different nodes 12, 14.

When the user equipment 16 has performed the beam switch 30, the user equipment 16 communicates with the second node 14 using beam B_{2,2} of the second node 14. The second numerology control message 32 is then sent to the user equipment 16 by the second node 14.

Of course, the features of each of the embodiments can be combined. In particular, the automatic change to the default numerology N_{D} of the second embodiment can also be used in the third embodiment.

## Claims

1. A beam switching method in a multi beam network (10) comprising a user equipment (16) and at least one node (12, 14) providing multiple beams (B_{1,1}, B_{1,2}, B_{1,3}, B_{2,1}, B_{2,2}, B_{2,3}), wherein the method comprises the following steps:
a) conducting a beam switching process (19) of the user equipment (16) from a first beam (B_{1,2}) provided by the at least one node (12) to a second beam (B_{1,1}; B_{2,2}), and
b) sending a first numerology control message (18) from the at least one node (12) to the user equipment (16) prior to the beam switching process (19),
wherein the first numerology control message (18) comprises a first numerology (N₁) and/or an instruction for the user equipment (16) to reduce numerology to achieve a first numerology (N₁), wherein the first numerology (N₁) is used by the user equipment (16) and the at least one node (12, 14) during the beam switching process, wherein the first numerology (N₁) defines waveform parameters, wherein the first numerology (N₁) is a more robust and reliable numerology than during normal communication,
wherein the waveform parameters are a subcarrier spacing and/or a length of a cyclic prefix, wherein the subcarrier spacing and/or the cyclic prefix are enlarged for decreasing numerology, and wherein the subcarrier spacing and/or the cyclic prefix are reduced for increasing numerology.

2. The beam switching method according to claim 1, wherein the first beam (B_{1,2}) is provided by a different node (14) or the same node (12) than the second beam (B_{1,1}; B_{2,2}).

3. The beam switching method according to any one of the preceding claims, wherein the method further comprises the step of sending a second numerology control message (32) from the at least one node (12; 14) to the user equipment (16) after the beam switching process (19).

4. The beam switching method according to claim 3, wherein the second numerology control message (32) comprises a second numerology (N₂) and/or an instruction for the user equipment (16) to increase numerology to achieve a second numerology (N₂), wherein the second numerology (N₂) defines waveform parameters.

5. The beam switching method according to claim 3 or 4 wherein the second numerology (N₂) is larger than first numerology (N₁).

6. The beam switching method according to any one of the preceding claims, wherein the beam switching process (19) comprises the following steps:
a) sending a beam switch configuration control message (20) from the at least one node (12) to the user equipment (16),
b) receiving a measurement report (24) from the user equipment (16) at the at least one node (12), and
c) sending a beam switch command (28) from the at least one node (12) to the user equipment (16).

7. The beam switching method according to claim 6, wherein the user equipment (16) measures the beam quality of the beams (B_{1,1}, B_{1,2}, B_{1,3}, B_{2,1}, B_{2,2}, B_{2,3}) identified in the beam switch configuration control message (20).

8. The beam switching method according to claim 6 or 7, wherein prior to sending the beam switch command (28), the at least one node (12) chooses the second beam (B_{1,1}; B_{2,2}) from the multiple beams (B_{1,1}, B_{1,2}, B_{1,3}, B_{2,1}, B_{2,2}, B_{2,3}) of the multi beam network (10) based on at least the measurement report (24) and/or beam load.

9. The beam switching method according to any one of the preceding claims, wherein the user equipment (16) and the at least one node (12) use a default numerology (N_{D}) prior to sending the first numerology control message (18) by the at least one node (12) and wherein the user equipment (16) and the at least one node (12) use the default numerology (N_{D}) again after a predefined period of time (P₁) after sending the first numerology control message (18) by the node (12), after a predefined period of time (P₂) after sending the beam switch command (28), and/or after a predefined period of time (P₃) after the beam switching process (19) has been completed, wherein the default numerology (N_{D}) defines waveform parameters.

10. The beam switching method according to any one of the preceding claims, wherein the symbol duration, in particular the orthogonal frequency-division multiplexing (OFDM) symbol duration, is longer using the first numerology (N₁) than the symbol duration, in particular the orthogonal frequency-division multiplexing (OFDM) symbol duration, using the second numerology (N₂) and/or the default numerology (N_{D}).

11. A node for a multi beam network configured to provide several beams (B_{1,2}, B_{1,1}, B_{1,3}; B_{2,1}, B_{2,2}, B_{2,3}) and configured to perform a method according to any one of the preceding claims in conjunction with a user equipment (16).

12. A multi beam network for providing mobile telecommunication services, comprising at least one node (12, 14) according to claim 11.

## Patentansprüche

1. Strahlumschaltverfahren in einem Mehrfachstrahlnetzwerk (10), das eine Teilnehmereinrichtung (16) und mindestens einen Knoten (12, 14), der mehrere Strahlen (B_{1,1}, B_{1,2}, B_{1,3}, B_{2,1}, B_{2,2}, B_{2,3}) bereitstellt, umfasst, wobei das Verfahren die folgenden Schritte umfasst:
a) Ausführen eines Strahlumschaltprozesses (19) der Teilnehmereinrichtung (16) von einem ersten Strahl (B_{1,2}), der von dem mindestens einen Knoten (12) bereitgestellt wird, auf einen zweiten Strahl (B_{1,1}; B_{2,2}) und
b) Senden einer ersten Numerologiesteuernachricht (18) von dem mindestens einen Knoten (12) vor dem Strahlumschaltprozess (19) an die Teilnehmereinrichtung (16),
wobei die erste Numerologiesteuernachricht (18) eine erste Numerologie (N₁) und/oder eine Anweisung für die Teilnehmereinrichtung (16) zum Reduzieren einer Numerologie, um eine erste Numerologie (N₁) zu erreichen, umfasst, wobei die erste Numerologie (N₁) von der Teilnehmereinrichtung (16) und dem mindestens einen Knoten (12, 14) während des Strahlumschaltprozesses verwendet wird, wobei die erste Numerologie (N₁) Wellenformparameter definiert, wobei die erste Numerologie (N₁) eine robustere und zuverlässigere Numerologie als während der normalen Kommunikation ist,
wobei die Wellenformparameter ein Unterträgerabstand und/oder eine Länge eines zyklischen Präfix sind, wobei der Unterträgerabstand und/oder das zyklische Präfix zum Verringern einer Numerologie vergrößert werden und wobei der Unterträgerabstand und/oder das zyklische Präfix zum Erhöhen einer Numerologie verkleinert werden.

2. Strahlumschaltverfahren nach Anspruch 1, wobei der erste Strahl (B_{1,2}) von einem anderen Knoten (14) oder vom selben Knoten (12) wie der zweite Strahl (B_{1,1}; B_{2,2}) bereitgestellt wird.

3. Strahlumschaltverfahren nach einem der vorhergehenden Ansprüche, wobei das Verfahren ferner den Schritt des Sendens einer zweiten Numerologiesteuernachricht (32) von dem mindestens einen Knoten (12; 14) nach dem Strahlumschaltprozess (19) an die Teilnehmereinrichtung (16) umfasst.

4. Strahlumschaltverfahren nach Anspruch 3, wobei die zweite Numerologiesteuernachricht (32) eine zweite Numerologie (N₂) und/oder eine Anweisung für die Teilnehmereinrichtung (16) zum Erhöhen einer Numerologie, um eine zweite Numerologie (N₂) zu erreichen, umfasst, wobei die zweite Numerologie (N₂) Wellenformparameter definiert.

5. Strahlumschaltverfahren nach Anspruch 3 oder 4, wobei die zweite Numerologie (N₂) größer ist als die erste Numerologie (N₁).

6. Strahlumschaltverfahren nach einem der vorhergehenden Ansprüche, wobei der Strahlumschaltprozess (19) die folgenden Schritte umfasst:
a) Senden einer Strahlumschaltauslegungssteuernachricht (20) von dem mindestens einen Knoten (12) an die Teilnehmereinrichtung (16),
b) Empfangen eines Messberichts (24) an dem mindestens einen Knoten (12) von der Teilnehmereinrichtung (16), und
c) Senden eines Strahlumschaltbefehls (28) von dem mindestens einen Knoten (12) an die Teilnehmereinrichtung (16).

7. Strahlumschaltverfahren nach Anspruch 6, wobei die Teilnehmereinrichtung (16) die Strahlqualität der Strahlen (B_{1,1}, B_{1,2}, B_{1,3}, B_{2,1}, B_{2,2}, B_{2,3}) misst, die in der Strahlumschaltauslegungssteuernachricht (20) identifiziert sind.

8. Strahlumschaltverfahren nach Anspruch 6 oder 7, wobei vor dem Senden des Strahlumschaltbefehls (28) der mindestens eine Knoten (12) mindestens auf Basis des Messberichts (24) und/oder einer Strahllast den zweiten Strahl (B_{1,1}; B_{2,2}) aus den mehreren Strahlen (B_{1,1}, B_{1,2}, B_{1,3}, B_{2,1}, B_{2,2}, B_{2,3}) des Mehrfachstrahlnetzwerks (10) wählt.

9. Strahlumschaltverfahren nach einem der vorhergehenden Ansprüche, wobei die Teilnehmereinrichtung (16) und der mindestens eine Knoten (12) vor dem Senden der ersten Numerologiesteuernachricht (18) durch den mindestens einen Knoten (12) eine Standardnumerologie (N_{D}) verwenden und wobei die Teilnehmereinrichtung (16) und der mindestens eine Knoten (12) nach einer vordefinierten Zeitperiode (P₁) nach Senden der ersten Numerologiesteuernachricht (18) durch den Knoten (12), nach einer vordefinierten Zeitperiode (P₂) nach Senden des Strahlumschaltbefehls (28) und/oder nach einer vordefinierten Zeitperiode (P₃), nachdem der Strahlumschaltprozess (19) abgeschlossen wurde, die Standardnumerologie (N_{D}) erneut verwenden, wobei die Standardnumerologie (N_{D}) Wellenformparameter definiert.

10. Strahlumschaltverfahren nach einem der vorhergehenden Ansprüche, wobei die Symboldauer, insbesondere die orthogonale Frequenzmultiplexing(OFDM)-Symboldauer, unter Verwendung der ersten Numerologie (N₁) länger ist als die Symboldauer, insbesondere die orthogonale Frequenzmultiplexing(OFDM)-Symboldauer, unter Verwendung der zweiten Numerologie (N₂) und/oder der Standardnumerologie (N_{D}).

11. Knoten für ein Mehrfachstrahlnetzwerk, der dazu ausgelegt ist, mehrere Strahlen (B_{1,2}, B_{1,1}, B_{1,3}; B_{2,1}, B_{2,2}, B_{2,3}) bereitzustellen, und dazu ausgelegt, in Verbindung mit einer Teilnehmereinrichtung (16) ein Verfahren nach einem der vorhergehenden Ansprüche durchzuführen.

12. Mehrfachstrahlnetzwerk zum Bereitstellen von mobilen Telekommunikationsdiensten, das mindestens einen Knoten (12, 14) nach Anspruch 11 umfasst.

## Revendications

1. Procédé de commutation de faisceau dans un réseau à faisceaux multiples (10) comprenant un équipement utilisateur (16) et au moins un nœud (12, 14) fournissant de multiples faisceaux (B_{1,1}, B_{1,2}, B_{1,3}, B_{2,1}, B_{2,2}, B_{2,3}), dans lequel le procédé comprend les étapes suivantes :
a) la réalisation d'un processus de commutation de faisceau (19) de l'équipement utilisateur (16) d'un premier faisceau (B_{1,2}) fourni par l'au moins un nœud (12) à un second faisceau (B_{1,1}, B_{2,2}), et
b) l'envoi d'un premier message de commande de numérologie (18) de l'au moins un nœud (12) à l'équipement utilisateur (16) avant le processus de commutation de faisceau (19),
dans lequel le premier message de commande de numérologie (18) comprend une première numérologie (N₁) et/ou un ordre pour que l'équipement utilisateur (16) réduise la numérologie pour obtenir une première numérologie (N₁), dans lequel la première numérologie (N₁) est utilisée par l'équipement utilisateur (16) et l'au moins un nœud (12, 14) au cours du processus de commutation de faisceau, dans lequel la première numérologie (N₁) définit des paramètres de forme d'onde, dans lequel la première numérologie (N₁) est une numérologie plus robuste et fiable qu'au cours d'une communication normale,
dans lequel les paramètres de forme d'onde sont un espacement de sous-porteuse et/ou une longueur d'un préfixe cyclique, dans lequel l'espacement de sous-porteuse et/ou le préfixe cyclique sont agrandis pour une numérologie décroissante, et dans lequel l'espacement de sous-porteuse et/ou le préfixe cyclique sont réduits pour une numérologie croissante.

2. Procédé de commutation de faisceau selon la revendication 1, dans lequel le premier faisceau (B_{1,2}) est fourni par un nœud différent (14) ou le même nœud (12) que le second faisceau (B_{1,1}, B_{2,2}).

3. Procédé de commutation de faisceau selon l'une quelconque des revendications précédentes, dans lequel le procédé comprend en outre l'étape de l'envoi d'un second message de commande de numérologie (32) de l'au moins un nœud (12 ; 14) à l'équipement utilisateur (16) après le processus de commutation de faisceau (19).

4. Procédé de commutation de faisceau selon la revendication 3, dans lequel le second message de commande de numérologie (32) comprend une seconde numérologie (N₂) et/ou un ordre pour que l'équipement utilisateur (16) augmente la numérologie pour obtenir une seconde numérologie (N₂), dans lequel la seconde numérologie (N₂) définit des paramètres de forme d'onde.

5. Procédé de commutation de faisceau selon la revendication 3 ou 4, dans lequel la seconde numérologie (N₂) est plus grande que la première numérologie (N₁).

6. Procédé de commutation de faisceau selon l'une quelconque des revendications précédentes, dans lequel le processus de commutation de faisceau (19) comprend les étapes suivantes :
a) l'envoi d'un message de commande de configuration de commutation de faisceau (20) de l'au moins un nœud (12) à l'équipement utilisateur (16),
b) la réception d'un rapport de mesure (24) à partir de l'équipement utilisateur (16) au niveau de l'au moins au nœud (12), et
c) l'envoi d'une instruction de commutation de faisceau (28) de l'au moins un nœud (12) à l'équipement utilisateur (16) .

7. Procédé de commutation de faisceau selon la revendication 6, dans lequel l'équipement utilisateur (16) mesure la qualité de faisceau des faisceaux (B_{1,1}, B_{1,2}, B_{1,3}, B_{2,1}, B_{2,2}, B_{2,3}) identifiés dans le message de commande de configuration de commutation de faisceau (20).

8. Procédé de commutation de faisceau selon la revendication 6 ou 7, dans lequel avant l'envoi de l'instruction de commutation de faisceau (28), l'au moins un nœud (12) choisit le second faisceau (B_{1,1}, B_{2,2}) parmi les multiples faisceaux (B_{1,1}, B_{1,2}, B_{1,3}, B_{2,1}, B_{2,2}, B_{2,3}) du réseau à faisceaux multiples (10) sur la base d'au moins le rapport de mesure (24) et/ou la charge de faisceau.

9. Procédé de commutation de faisceau selon l'une quelconque des revendications précédentes, dans lequel l'équipement utilisateur (16) et l'au moins un nœud (12) utilisent une numérologie par défaut (N_{D}) avant l'envoi du premier message de commande de numérologie (18) par l'au moins un nœud (12) et dans lequel l'équipement utilisateur (16) et l'au moins un nœud (12) utilisent la numérologie par défaut (N_{D}) à nouveau après un laps de temps prédéfini (P₁) après l'envoi du premier message de commande de numérologie (18) par le nœud (12), après un laps de temps prédéfini (P₂) après l'envoi de l'instruction de commutation de faisceau (28), et/ou après un laps de temps prédéfini (P₃) après que le processus de commutation de faisceau (19) a été achevé, dans lequel la numérologie par défaut (N_{D}) définit des paramètres de forme d'onde.

10. Procédé de commutation de faisceau selon l'une quelconque des revendications précédentes, dans lequel la durée de symbole, en particulier la durée de symbole de multiplexage par répartition orthogonale de la fréquence (OFDM), est plus longue à l'aide de la première numérologie (N₁) que la durée de symbole, en particulier la durée de symbole de multiplexage par répartition orthogonale de la fréquence (OFDM), à l'aide de la seconde numérologie (N₂) et/ou de la numérologie par défaut (N_{D}).

11. Nœud pour un réseau à faisceaux multiples configuré pour fournir plusieurs faisceaux (B_{1,2}, B_{1,1}, B_{1,3}, B_{2,1}, B_{2,2}, B_{2,3}) et configuré pour réaliser un procédé l'une quelconque des revendications précédentes en conjonction avec un équipement utilisateur (16).

12. Réseau à faisceaux multiples pour fournir des services de télécommunications mobiles, comprenant au moins un nœud (12, 14) selon la revendication 11.
